# EUROPEAN PATENT APPLICATION

(11) **EP 4 056 040 A1**
(43) Date of publication of application: **14.09.2022**
(21) Application number: 21162154.5
(22) Date of filing: 11.03.2021
(51) Int. Cl.: A21B 3/13

(54) **BAKING TRAY**

(71) Applicant: ELECTROLUX APPLIANCES AKTIEBOLAG, 105 45 Stockholm (SE)
(72) Inventor: MOLL, Magdalena, 91541 Rothenburg ob der Tauber (DE); BREUER, Tim, 91541 Rothenburg ob der Tauber (DE); KATINAITE, Laura, 17073 Solna (SE)
(74) Representative: Electrolux Group Patents

(57) **Abstract**

A baking tray (14; 16) for use in a food preparation oven, the baking tray comprises:
(a) a first tray section (18) having a floor region (22) and side walls (36) along three sides of the floor region, the first tray section having a fourth side where there is no side wall;
(b) a second tray section (20) having a floor region (28) and side walls along three sides of the floor region, the second tray section having a fourth side where there is no side wall; wherein
(c) the first and the second tray sections (22, 28) configured for being connected along the fourth sides of the first and second tray sections.
In accordance with invention
(d) the first tray section (18) comprises at its fourth side an (24) extension along the floor region (28) and optionally along the side walls which when the tray sections are connected overlaps the floor region (28) and the side walls, respectively, of the second tray section (18), wherein the first and second tray sections in the region of the extension comprise means (26, 30) for establishing a form-fit connection when the tray sections are connected;
and the baking tray further comprises:
(e) a first and a second clip (32; 34; 44; 52) for securing the connection between the tray sections (18, 20), wherein each of the clips is configured to be mounted simultaneously over an end regions of the side wall (36) of the first tray section (18) and an end region of the side wall (36) of the second tray section (20).

## Description

The present invention relates to a baking tray, such as it may be used in conventional food preparation ovens.

Conventional baking trays usually cannot be positioned within standard dishwashers in an upright position because they are too large and hence have to be cleaned by hand.

From the prior art there are known pull-out baking trays wherein the baking tray comprises two or more sections which are movably joined to each other so that the sections overlap each other, but can be shifted to some extent so as to vary the size of the baking tray. Such a baking tray is shown in EP 0 238 437 A2 which shows a baking tray comprising a first and a second section each having a floor region and side walls along three sides of the floor region. One of the sections has a slightly smaller width than the other section so that the sections can be fit together such that the sections overlap each other along the fourth sides of the sections where there is no side wall, wherein the opposing walls of one of the sections comprise bent edges that are configured to accommodate the respective edges of the opposing walls of the other section of the baking tray. While in this manner there is provided a baking tray of which one dimension of the extension of the floor region can be varied, in order to provide for a stable connection between the two sections there has to be provided for a substantial overlap between the sections, which is disadvantageous in several aspects. That is, especially when the baking tray is used for preparing dishes that involve liquid food materials, such materials may flow into the overlap between the two tray sections where on heating the tray the food materials may bake onto the tray sections. Particularly when the size of the baking tray is not frequently changed, a user may not be aware of such soiling and thus may repeatedly use the soiled tray, wherein on repeated heating of the tray the food remains in the overlap region form a solid layer or coating that is difficult to remove.

Further, although in some embodiments of such pull-out baking trays, as they are also shown in DE 19523729 A1 and EP 2863779 B1, the tray sections may be separated from each other, the individual tray sections also when disassembled have a considerable size that may impede loading the tray sections into a dishwasher, because in order to provide for a stable connection between the tray sections the overlap region has to have a considerable width. While pull-out baking trays conventionally are provided with a lining of PTFE or ceramics which shall prevent damages of the tray surface due to possible scratching of the edges of the tray sections when extending or pushing together the tray sections, such linings preclude the tray to be washed in a dishwasher because such lining materials are not allowed to be put into a dishwasher.

In an attempt to alleviate such problem it was proposed in US 6 065 394 to provide for a foldable baking pan that comprises two sections which are connected to each other by means of hinges, wherein the fold margins of the two sections preferably provide for some overlap. While in this approach the sizes of the two sections can be minimized in an effort to provide for a baking tray that might fit into a dishwasher, the tray as had proved to be impractical in practice, on the one hand because also in such folding configuration considerable scratching in the overlapping sections may occur, which is intolerable particularly when the tray is provided with an anti-sticking coating, such as a Teflon coating, and on the other hand because the foldable tray will freely collapse during handling if inadvertently being gripped at the two edges that extend in parallel to the region where the two tray sections are joined via the hinges, i.e. in parallel to the overlap region.

It is an object of the present invention to provide for a baking tray that is easy and safe to use in an oven, but which can be cleaned in a dishwasher and which overcomes the disadvantages of the above-mentioned baking trays that are known from the prior art.

The above object is solved by the present invention which provides a baking tray for use in a food preparation oven, the baking tray comprising:
(a) a first tray section having a floor region and side walls along three sides of the floor region, the first tray section having a fourth side where there is no side wall;
(b) a second tray section having a floor region and side walls along three sides of the floor region, the second tray section having a fourth side where there is no side wall;
(c) the first and the second tray sections configured for being connected along the fourth sides of the first and second tray sections;
   wherein in accordance with the present invention
(d) the first tray section comprises at its fourth side an extension along the floor region and optionally along the side walls which when the tray sections are connected overlaps the floor region and the side walls, respectively, of the second tray section, wherein the first and second tray sections in the region of the extension comprise means for establishing a form-fit connection when the tray sections are connected;
and wherein the baking tray further comprises:
(e) a first and a second clip for securing the connection between the tray sections, wherein each of the clips is configured to be mounted simultaneously over an end regions of the side wall of the first tray section and an end region of the side wall of the second tray section.

While in conventional baking trays the width is larger than the depth, in order to minimize the dimensions of the tray sections, the tray sections preferably are sized such that the tray area is split longitudinally into two portions having substantially the same dimensions. Dividing the tray longitudinally further has the advantage that the clips will be located in the middle of the front side and of the back side of the assembled tray where they do not impede inserting the tray into guide rails of the oven with which the tray is to be used.

Also in case that the baking tray comprises more than two tray sections, as it may be useful when the baking tray is a larger size commercial baking tray, the tray sections preferably are sized to all have similar dimensions, so as to minimize the dimensions of the individual tray sections.

A baking tray for a conventional household oven typically has a width of about 42 to 46 cm and a length of about 30 to 38 cm, and for example may have a size of width of 42,2 cm and a length of 37 cm.

Given that in such a baking tray both sides are considerably larger than dining plates, which typically have a diameter of about 22 to 27 cm, conventional baking trays cannot by cleaned in a dishwasher. In contrast thereto, the baking tray suggested herein, in which the baking tray comprises two or even more sections, in which when starting from the afore-mentioned conventional tray of 37 x 42,2 cm the tray sections thus will have a size of half the width (plus extension) by 37 cm, such as when providing for an extension of 1,6 cm of about 22 x 37 cm. When being set in an upright orientation into a dishwasher, the tray sections thus will have a height that corresponds to a smaller dining plate, so that the tray sections will easily fit it any standard dishwasher.

The present invention thus provides for a baking tray having tray sections which when assembled form a standard size baking tray, but which when disassembled can be set in an upright orientation into a dishwasher so as to facilitate cleaning of the baking tray.

Since for assembling the baking tray the tray sections are arranged side by side so that the fourth sides of the tray sections face each other and then the second tray section is lowered onto the first tray section so as to rest on the extension of the first tray section, whereupon the connection between the tray sections is secured by applying the clips, assembling and disassembling of the baking tray does not involve any sliding movements of the tray sections, such as occur in conventional pull-out baking trays. Since in this manner, possible damages of the surfaces of the tray sections due to scratching of the tray sections against each other are avoided, the tray sections further may be provided with coatings of a brittle or scratch-sensitive material so as to provide for an easy-to-clean or anti-sticking coating, such as an enamel coating or a PTFE coating, as will be further detailed below.

Preferred embodiments of the present invention are defined in the dependent claims.

In particular, the side walls of the first and second tray sections may comprise a substantially horizontal rim that extends outwards from the upper end of the side walls, wherein the clips are configured to be mounted over the horizontal rims. Providing for horizontal rims not only provides for further stabilization of the baking tray that provides for additional stiffness, the horizontal rims at the lateral sides of the baking tray may serve as carriers for holding the tray when it is inserted into respective guide rails that are provided at an oven with which the baking Is to be used.

In embodiments, the side walls of the first and second tray sections comprise a bulge where the clips are to be applied. In the assembled state, the clips grip about the bulge to thus secure the clip at the side walls of the tray sections. While such bulges may be provided only in the region of the clips, the bulge also can be a continuous bulge that extends along the entire length, or substantial parts thereof, of the side wall.

In such latter embodiments, the baking tray can be formed of a sheet material and the edges of the side walls of the first and second tray sections can be provided with a rolling or fold, wherein the clips are configured for gripping about the rolling or fold.

In embodiments the baking tray comprises a clip that is configured for being slidingly mounted at one of the tray sections, wherein the clip can be displaced between a first position in which the clip clasps about the end regions of the side walls of both the first and the second tray sections, and a second position in which the clip is retracted to clasp about an end region of a side walls of only one of the tray sections.

While the clips thus can be permanently mounted at one of the tray sections, they also can be configured to be temporarily removed for cleaning purposes.

In embodiments wherein the side walls of the first and second tray sections comprises a bulge, such as a rolling or fold, the clips thus may be configured to grip about the bulge, to be slid along the edge of the tray sections for releasing or securing the other tray section.

While in such embodiments the clips can be made of a substantially rigid material, such as metal or temperature resistant plastic, the clips may exhibit some resiliency so as to allow the provision of stops that limit the sliding displacement of the clips to the range of movement required to reach the first and the second positions, but wherein the clip can be slightly deformed so as to pass the respective stop so as to remove the clip for cleaning purposes.

In alternative embodiments, the clips are made of resilient material and are configured for being mounted at the tray sections by gripping resiliently about the bulge.
In such embodiments the clips may have a cross-sectional shape that comprises a region with a U-section where the clip can be pressed over the bulge, so that during mounting the clip the legs of the U-shape are spread apart, but snap back upon having passed the bulge, so as to arrest the clip onto the bulge.

In a further alternative embodiment the baking tray comprises a clip that is hinged to a side wall of one of the tray sections to be rotatable between a first position in which the clip clasps about the end regions of the side walls of both the first and the second tray sections, and a second position in which the clip projects from the side wall

Whereas generally the clip may be mounted at the side wall close to the end of the side wall where the tray section in the assembled state abuts against the other section, the stability of the connection between the tray sections can be improved when the clip is hinged at a distance to the edge of the side wall and thus in the first position spans also a portion of the side wall to which it is hinged.

Similarly to the embodiment in which the clip is configured to be slidingly mounted at one of the tray sections, also in the embodiment in which the clip is rotatably hinged to a side wall of one of the tray sections, the two clips for securing the connection between the tray sections can be provided both at the same tray section. In the alternative, there can be provided one clip per tray section, wherein in the assembly position of the tray sections the clips are provided at diagonally opposing corners of the tray sections.

In any of the embodiments, the clips may have a length as measured along the side walls that preferably is 2 to 8 times the depth of the extension as measured in the same direction.

For a baking tray for a conventional household oven, such as the afore-mentioned conventional tray of 37 x 42,2 cm, the extension typically will have a depth of about 0,8 cm to 4 cm, and preferably will be have a depth of about 1 cm to 2 cm, such as 1,2 cm.

Whereas the extension in which there is provided for means for establishing a form-fit connection between the tray sections when the tray sections are connected, such as by providing in one of the tray sections a grove for accommodating a corresponding land or projecting bend that is provided at the other tray section, provides for a defined mutual positioning of the tray sections, the connection is fixed and stabilized by the clips which in order to provide for a stable connection preferably have a length that considerably exceeds the depth of the extension. Thus, for a baking tray to be used in a conventional household oven the clip typically will have a lengthy of about 4 to 10 cm, preferably of about 5 to 8 cm.

That is, while the depth of the extension preferably is short and hence only adds little to the width of the tray section, the clips can be designed to be substantially longer so as to provide for a stable connection of the tray sections.

Given that the clips are configured to be mounted at the tray sections, the clips can be removed or in certain embodiments displaced so that their length does not add to the width of the respective tray section and hence does not impede setting the tray section into a dishwasher.

In preferred embodiments the baking tray comprises a coating at least on the upper side of the tray sections, such as an enamel coating or a coating made of fluoropolymers, such as polytetrafluoroethylene (PTFE) or perfluoroalkoxy alkanes (PFA).

While the tray sections may be formed of a material with which providing for a coating can be omitted, such as stainless steel aluminum, or the like, when providing for a non-stick coating which facilitates cleaning of the tray sections, providing for an enamel coating is preferred in view of its higher temperature resistance when compared to PTFE and considering that PTFE only provides for a limited suitability for use in dishwashers.

In any embodiments of the baking tray suggested herein, the means for establishing a form-fit connection when the tray sections are connected may comprise one or more depressions in one of the tray sections and one or more protrusions in the other tray section, wherein the one or more protrusions have a shape that is complementary to the shape of the respective depression with which the protrusion cooperates on assembly of the tray sections.

Thus, in such embodiments the extension may comprise a continuous or intermittent groove that extends in parallel to the edge of the fourth side of the first tray section, wherein the second tray section at its bottom side comprises a complementary continuous or intermittent ridge that extends in parallel to the edge of the fourth side of the section tray section.

Whereas establishing a form-fit connection between the tray sections thus may involve providing one more grooves or dents in one of the tray sections, and providing corresponding complementary lands or bulbs in the other tray section, in a preferred embodiment there is provided a continuous groove in the extension of the first tray section, i.e. a lengthy depression in the sheet material of the first tray section, and a cooperating land, preferably a similar lengthy depression in the sheet material of the second tray section, wherein in the assembled state the bottom side of the depression of the second tray section rests within the depression of the first tray section. Further to securing the positional relationship of the two tray sections, such continuous depressions provide for additional stability of the sheet material of the tray sections along the fourth side of the tray sections where there is no side wall.

The baking trays suggested herein may be configured in various shapes and materials depending on the food preparation purpose for which the tray shall be used. Thus, the first tray section, the second tray section, or both tray sections may comprises at least in a portion of its floor area, an even floor, a contoured floor, a perforated floor or a sectioned floor having a plurality of molds.

While the baking tray suggested herein may be configured to serve various purposes, and thus can be designed for example as a baking tray having a standard continuous floor, as a perforated patisserie tray, a perforated air fry tray, or a steaming tray. In alternative embodiments the baking tray can be designed to have a sectioned floor having a plurality of molds, such as for preparing muffins, cupcakes, or the like. When designing these baking trays such that the tray sections all have a standardized size, it is possible to combine tray sections of different tray types into a single combined tray. In this manner, there can be provided a multi-purpose tray which may be used to advantage for providing for different food preparation conditions in different zones of one and the same tray, such as a first zone having a continuous closed floor such as for the preparation of meat products that may release meat juice, and a second zone having a perforated floor that may be used for example for accommodating vegetables that are to be prepared by the aid of steam.

### BRIEF DESCRIPTION OF THE DRAWINGS

The present invention will be described in further detail with reference to the drawings from which further features, embodiments and advantages will become apparent, and in which:
- FIG. 1: illustrates a perspective view of an oven cavity in which there is arranged a baking tray in accordance with the present invention;
- FIG. 2: is a perspective view of a baking tray in accordance with the present invention;
- FIG. 3: illustrates a partial sectional view of a baking tray in accordance with the present invention;
- Fig. 4: illustrates a clip as it is employed in a first embodiment of the present invention;
- Fig. 5: illustrates a clip as it is employed in a second embodiment of the present invention;
- Fig. 6: illustrates a clip as it is employed in a third embodiment of the present invention; and
- FIG. 7: is a perspective view of a baking tray in accordance with the present invention wherein tray sections of different tray types are used.

### DETAILED DESCRIPTION OF THE DRAWINGS

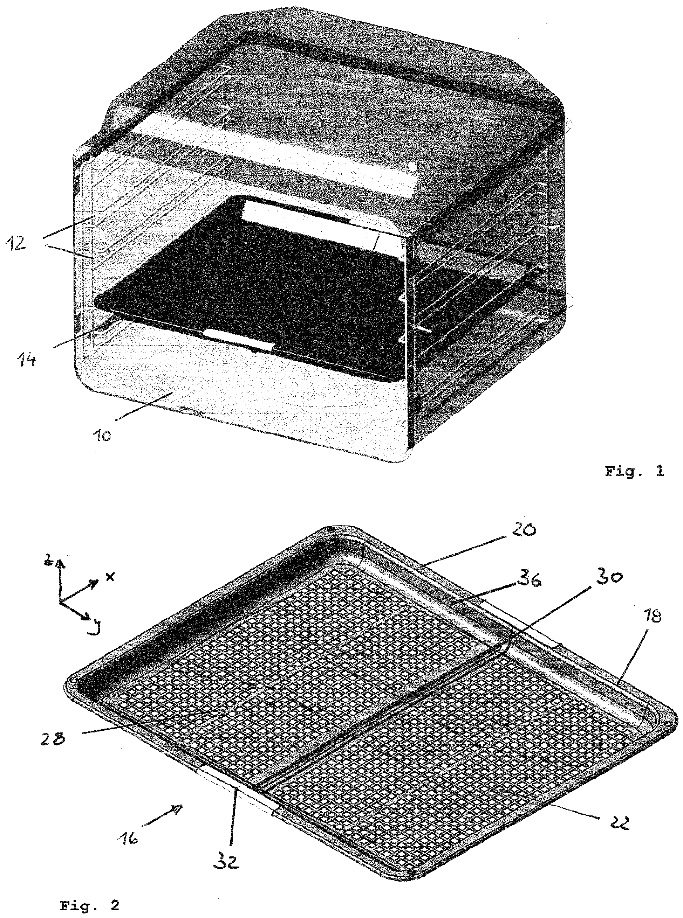

As illustrated in FIG. 1 which shows a perspective view of an oven cavity in which there is arranged a baking tray in accordance with the present invention, an oven cavity 10 comprises a plurality of rails 12 that are mounted at the opposing side walls of the oven cavity 10, which rails are configured for inserting one or more baking trays 14 at different heights.

Whereas baking tray 14 is shown in Fig. 1 as a baking tray having a continuous solid floor, Fig. 2 illustrates a baking tray 16 that comprises a first tray section 18 and a second tray section 20 which both have a perforated floor.

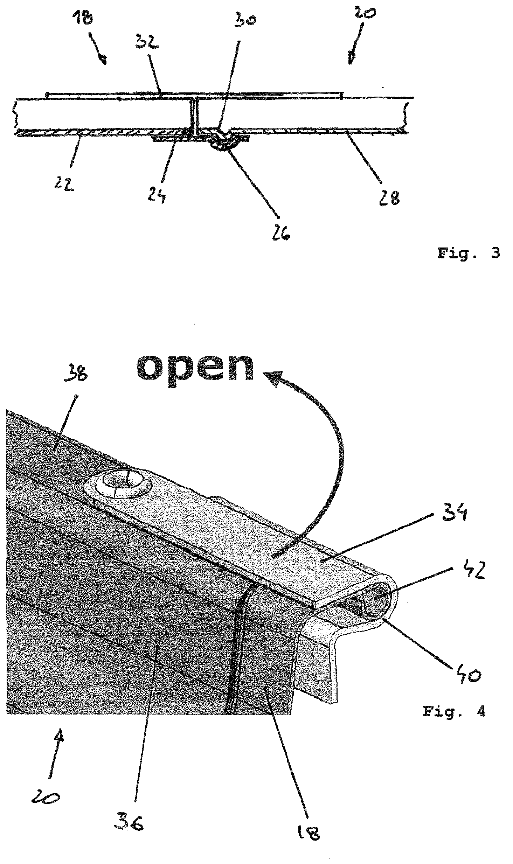

As can be best seen in Fig. 3, the first tray section 18 is provided at the bottom of its floor region 22 with an extension 24 in which there is provided a continuous groove 26 for accommodating a complimentary groove 30 provided in the floor region 28 of second tray section 20. Whereas in the embodiment shown in Fig. 3 the extension 24 is formed by a separate element that is attached at the bottom side of the floor region 22 of the first tray section 18, such extension also can be formed integral with the floor region 22 of the first tray section 18.

While the grooves 26 and 30 provide for a form-fit connection between the two tray sections, the tray sections are secured to each other by means of clips 32 which will be explained in further detail below.

Fig. 4 illustrates a sectional perspective view through a clip 34 as it is employed in a first embodiment of the present invention. In the illustrated embodiment clip 34 is hinged to a sidewall 36 of the second tray section 20. As shown in Fig. 4, sidewall 36 comprises a horizontal rim 38 that extends outwards from the upper end of the side wall 36, wherein the clip 34 is mounted at horizontal rim 38 so as to rotatable in the plane of horizontal rim 38.
In the closed position illustrated in Fig. 4, clip 34 grips with a bent portion 40 about a rolled portion 42 of horizontal rim 38, wherein as shown in the figures clip 34 spans both an end portion of rolled portion 42 of rim 38 of the first tray portion 18 and an end portion of rolled portion 42 of rim 38 of the second tray portion 20.

As will be understood from the above, in the baking trays of the present invention the form-fit means provided in the extension 24 that provides for an overlap region for the two tray sections provides for a fixation of the tray sections in the y-direction (see Fig. 2), and the clip provides for fixation of the tray sections in the x- and z-directions.

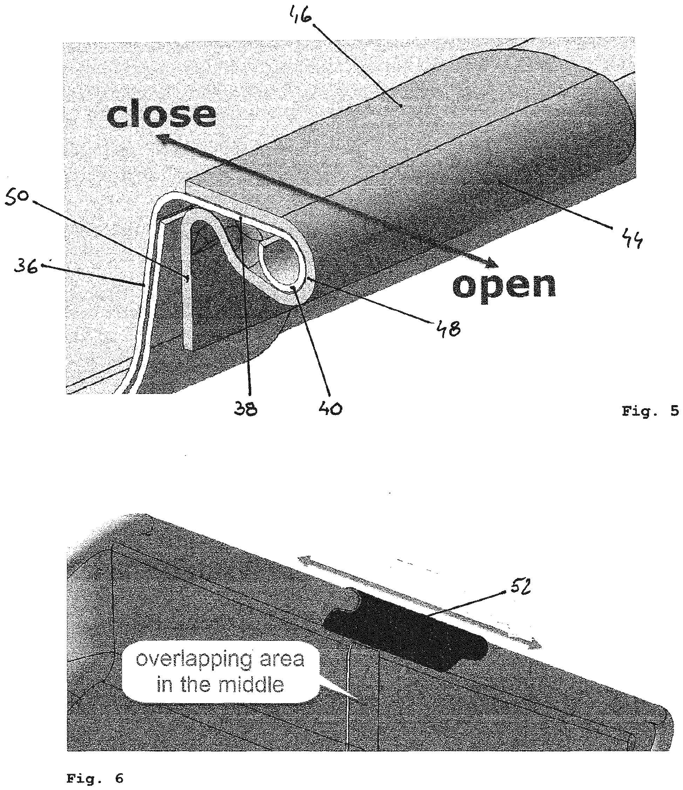

Fig. 5 illustrates a sectional perspective view through a clip 44 as it is employed in a second embodiment of the present invention, in which the clip is configured for a clipping engagement with the side walls of the tray sections.
As in the embodiment illustrated in Fig. 4, also in the embodiment illustrated in Fig. 5 the baking tray sections comprise side walls 36 having a horizontal rim 38, the edge of which comprises a rolling 40 which constitutes a bulge, wherein in the embodiment shown in Fig. 5 a clip 44 is employed that is made of a resilient material. Clip 44 has an upper flat section 46, a middle generally U-shaped section 48 and a generally straight lower section 50 that extends under an angle to the horizontal upper section 46.

In use, in order to attach clip 46 onto the horizontal rim 38 of the abutting first and second tray sections the clip 46 is pressed onto the rolling 40 of rim 38 so as to spread apart the U-shaped section 48 until the U-shaped section 48 fully rests against rolling 40. In order to open the clip 46, the user may grip the lower horizontal section 50 to bend open the clip and pull it off from the horizontal rim 38.

Fig. 6 illustrates a perspective view of a clip 52 as it is employed in a third embodiment of the present invention, in which the clip is configured for a sliding movement along the rim of the sidewalls of the tray sections. While Fig. 6 shows the closed position in which the clip 52 secures the two tray sections, in order to separate the tray sections the clip 52, which may have a similar cross-sectional shape as the clip shown in Fig. 5 but which is made of a more rigid material, is slid along the rim of the tray until the end of clip reaches the dividing line between the two tray sections and thus the tray sections can be lifted off from each other.

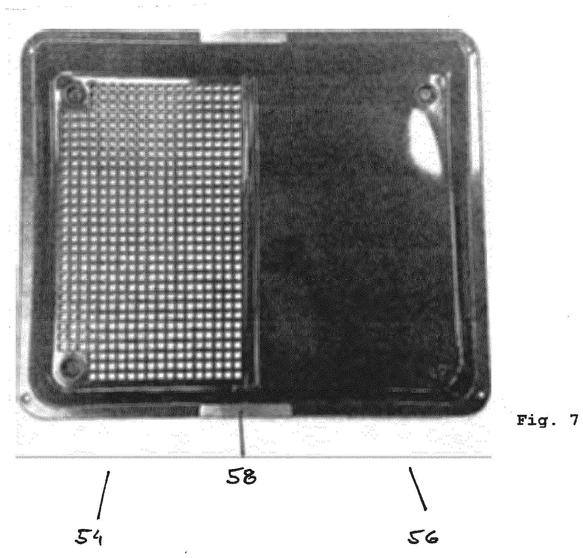

Fig. 7 illustrates a baking tray in accordance with the present invention, wherein the baking tray has been assembled by using tray sections from different baking trays. That is, whereas for the left half of the tray a tray section 54 is used that has been taken from a perforated tray, the right half of the tray is formed by a tray section 56 that belongs to a baking tray having a solid continuous floor. As in the other embodiments, tray sections 54 and 56 and secured to each other by means on clips 58 that are attached to the horizontal rim of the side walls of tray sections 54 and 56.

### LIST OF REFERENCE SIGNS

- 10: oven cavity
- 12: rails
- 14: baking tray
- 16: baking tray
- 18: first tray section
- 20: second tray section
- 22: floor region of 18
- 24: extension
- 26: groove
- 28: floor region of 20
- 30: groove
- 32: clip
- 34: clip
- 36: sidewall
- 38: horizontal rim
- 40: bent portion
- 42: rolled portion of 38
- 44: clip
- 46: upper section of 44
- 48: U-shaped section of 44
- 50: lower section of 44
- 52: clip
- 54: tray section
- 56: tray section
- 58: clip

## Claims

1. A baking tray (14; 16) for use in a food preparation oven, the baking tray comprising:
(a) a first tray section (18) having a floor region (22) and side walls (36) along three sides of the floor region, the first tray section having a fourth side where there is no side wall;
(b) a second tray section (20) having a floor region (28) and side walls along three sides of the floor region, the second tray section having a fourth side where there is no side wall;
(c) the first and the second tray sections (22, 28) configured for being connected along the fourth sides of the first and second tray sections;
**characterized by**
(d) the first tray section (18) comprising at its fourth side an extension (24) along the floor region (28) and optionally along the side walls which when the tray sections are connected overlaps the floor region (28) and the side walls, respectively, of the second tray section (18), wherein the first and second tray sections in the region of the extension comprise means (26, 30) for establishing a form-fit connection when the tray sections are connected;
and in that the baking tray further comprises:
(e) a first and a second clip (32; 34; 44; 52) for securing the connection between the tray sections (18, 20), wherein each of the clips is configured to be mounted simultaneously over an end regions of the side wall (36) of the first tray section (18) and an end region of the side wall (36) of the second tray section (20).

2. The baking tray of claim 1, wherein the side walls (36) of the first and second tray sections (18, 20) comprise a substantially horizontal rim (38) that extends outwards from the upper end of the side walls, wherein the clips (32; 34; 44; 52) are configured to be mounted over the horizontal rims.

3. The baking tray of claim 1 or 2, wherein the side walls (36) of the first and second tray sections (18, 20) comprise a bulge (42), and the clips (32; 34; 44; 52) are configured for gripping about the bulge.

4. The baking tray of claim 3, wherein the baking tray is formed of a sheet material and the edges of the side walls (36) of the first and second tray sections (18, 20) are provided with a rolling (42) or fold, wherein the clips (32; 34; 44; 52) are configured for gripping about the rolling or fold.

5. The baking tray of any one of the preceding claims, which comprises a clip (52) that is configured for being slidingly mounted at one of the tray sections (18, 20), wherein the clip can be displaced between a first position in which the clip clasps about the end regions of the side walls (36) of both the first and the second tray sections, and a second position in which the clip is retracted to clasp about an end region of a side walls of only one of the tray sections.

6. The baking tray of claims 3 or 4, wherein the clips (32; 34; 44; 52) are made of resilient material and are configured for being mounted at the tray sections by gripping resiliently about the bulge (42).

7. The baking tray of claim 1 or 2, comprising a clip (34) that is hinged to a side wall (36) of one of the tray sections (20) to be rotatable between a first position in which the clip clasps about the end regions of the side walls of both the first and the second tray sections (18, 20), and a second position in which the clip projects from the side wall

8. The baking tray of any one of the preceding claims, wherein the clips (32; 34; 44; 52) have a length as measured along the side walls that is 2 to 8 times the depth of the extension (24) as measured in the same direction.

9. The baking tray of any one of the preceding claims, comprising a coating at least on the upper side of the tray sections (18, 20).

10. The baking tray of claim 9, wherein the coating is an enamel coating or a coating made of fluoropolymers, such as polytetrafluoroethylene (PTFE) or perfluoroalkoxy alkanes (PFA).

11. The baking tray of any one of the preceding claims, wherein the means for establishing a form-fit connection when the tray sections (18, 20) are connected comprises one or more depressions in one of the tray sections (18) and one or more protrusions in the other tray section (20), the one or more protrusion having a shape that is complementary to the shape of the respective depression with which the protrusion cooperates on assembly of the tray sections.

12. The baking tray of claim 11, wherein the extension (24) comprising a continuous or intermittent groove (26) extending in parallel to the edge of the fourth side of the first tray section (18), and wherein the second tray section (20) at its bottom side comprises a complementary continuous or intermittent ridge (30) extending in parallel to the edge of the fourth side of the section tray section.

13. The baking tray of any one of the preceding claims, wherein the first and/or the second tray section (18, 20) comprises at least in a portion of its floor area, an even floor, a contoured floor, a perforated floor or a sectioned floor having a plurality of molds.
